# EUROPEAN PATENT SPECIFICATION

(11) **EP 3 005 807 B1**
(45) Date of publication and mention of the grant of the patent: **06.11.2019**
(21) Application number: 13886298.2
(22) Date of filing: 03.06.2013
(51) Int. Cl.: H04W 16/14, H04W 48/16, H04W 28/04, H04W 76/00, H04W 64/00

(54) **METHODS AND NODES FOR SHARING FREQUENCY CARRIERS OF A PUBLIC SAFETY NETWORK**
VERFAHREN UND KNOTEN ZUR GEMEINSAMEN NUTZUNG VON FREQUENZTRÄGERN EINES ÖFFENTLICHEN SICHERHEITSNETZWERKS
PROCÉDÉS ET NOEUDS DE PARTAGE DE PORTEUSES RADIOÉLECTRIQUES D'UN RÉSEAU DE SÉCURITÉ PUBLIQUE

(43) Date of publication of application: 13.04.2016
(73) Proprietor: Telefonaktiebolaget LM Ericsson (publ), 164 83 Stockholm (SE)
(72) Inventor: LI, Gen, Beijing 100029 (CN); KAZMI, Muhammad, 167 39 Bromma (SE); MIAO, Qingyu, Beijing 100094 (CN)
(74) Representative: Zacco Sweden AB
(86) International application number: PCT/CN2013/076626
(87) International publication number: WO 2014/194448

(56) References cited:
- CN-A- 102 986 287
- US-A1- 2007 149 187
- US-A1- 2011 305 137
- US-A1- 2012 014 332
- US-A1- 2012 014 332
- LEHR W ET AL: "Spectrum Pooling for Next Generation Public Safety Radio Systems", NEW FRONTIERS IN DYNAMIC SPECTRUM ACCESS NETWORKS, 2008. DYSPAN 2008. 3RD IEEE SYMPOSIUM ON, IEEE, PISCATAWAY, NJ, USA, 14 October 2008 (2008-10-14), pages 1-23, XP031353311, ISBN: 978-1-4244-2016-2

## Description

### TECHNICAL FIELD

The disclosure relates to spectrum sharing, and more specifically to methods and nodes for sharing one or more frequency carriers of a public safety network with a commercial network.

### BACKGROUND

3GPP Long Term Evolution (LTE) is the fourth-generation mobile communication technologies standard developed within the 3^{rd} Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an UTRAN and an E-UTRAN, a User Equipment (UE) is wirelessly connected to a Radio Base Station (RBS) commonly referred to as a NodeB (NB) in UMTS, and as an evolved NodeB (eNodeB or eNB) in LTE. A UE is thus a wireless device. An RBS is a general term for a radio network node capable of transmitting radio signals to a UE and receiving signals transmitted by a UE.

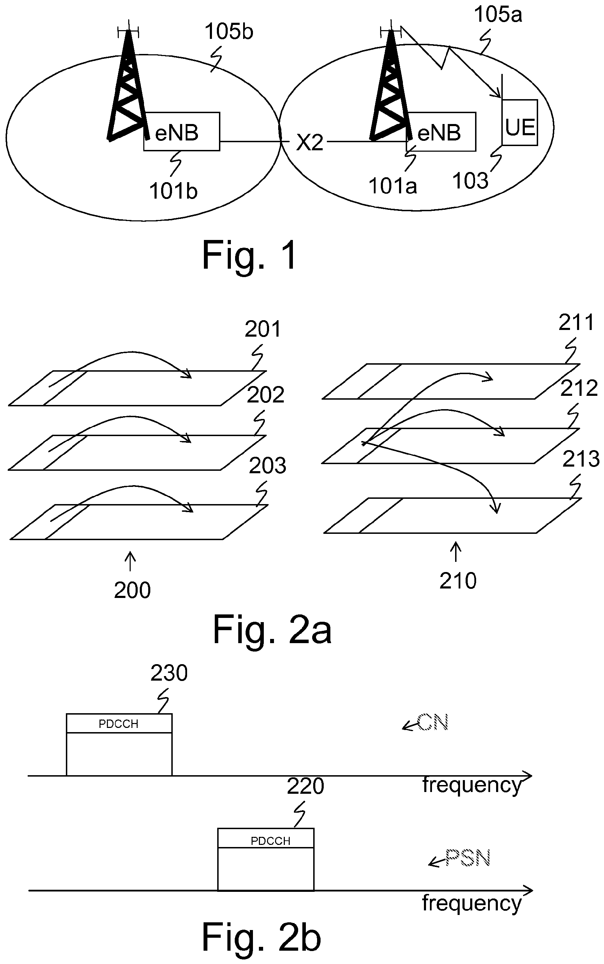

**Figure 1** illustrates a radio access network in an LTE system. An eNodeB 101a serves a UE 103 located within the RBS's geographical area of service or the cell 105a. The eNB 101a is directly connected to the core network. The eNB 101a is also connected via an X2 interface to a neighboring eNB 101b serving another cell 105b.

### Concepts related to frequency bands

New frequency bands for different technologies are being standardized with an ever increasing pace. Various regulatory organizations and standardization bodies are also putting considerable effort in introducing these bands to be used universally or at least in large part of the world to facilitate roaming, simplify device implementation and cost reduction. Standardization bodies such as 3GPP specify frequency bands and associated aspects such as frequency band number, also known as band indicator, channel arrangement, signaling and requirements for different frequency bands.

The carrier frequencies, also referred to as carriers, in a frequency band are enumerated. The enumeration is standardized such that the combination of the frequency band and the carrier frequency can be determined by a unique number called absolute radio frequency number.

In Global System for Mobile Communications (GSM) and Enhanced Data Rates for GSM Evolution (EDGE) Radio Access Network (GERAN), UTRAN and E-UTRAN the channel numbers are called Absolute Radio Frequency Channel Numbers (ARFCN), Universal Terrestrial Radio Access (UTRA) Absolute Radio Frequency Channel Number (UARFCN) and E-UTRA Absolute Radio Frequency Channel Number (EARFCN) respectively. In Frequency Division Duplex (FDD) systems separate channel numbers are specified for Uplink (UL) and Downlink (DL). In Time Division Duplex (TDD) there is only one channel number since the same frequency is used in both directions.

The channel numbers such as EARFCN for each frequency band are unique to distinguish between different frequency bands. The channel number for each frequency band can be derived from the expressions and mapping tables defined in the relevant specifications for each technology. Based on the signaled channel numbers and pre-defined parameters associated with each frequency band, the UE can determine the actual carrier frequency in MHz and the corresponding frequency band. Document US 2012/014332 A1 (SMITH CLINT [US] ET AL) 19 January 2012 (2012-01-19) discloses methods and systems for dynamic spectrum arbitrage.

### Radio requirements

### Unwanted emissions

Wireless devices such as UEs as well as radio network nodes such as Base Stations (BS) have to fulfill a pre-defined set of Radio Frequency (RF) transmitter and RF receiver requirements to ensure that the wireless device or the radio network node limits interference and is able to handle a certain level of interference respectively. More specifically, the Out Of Band (OOB) and spurious emission requirements are to be met as part of the RF transmitter requirements. The objective of OOB and spurious emission requirements is to limit the interference caused by the transmitters in the UE or BS outside of their respective operating bandwidths in adjacent carriers or frequency bands. In fact, all wireless communication standards such as GSM, UTRAN, and E-UTRAN, clearly specify the OOB and spurious emission requirements to limit or at least minimize the unwanted emissions. They are primarily approved and set by the national and international regulatory bodies.

The major unwanted emission requirements, which are typically specified by the standardization bodies and eventually enforced by the regulators in different countries and regions for both the UE and the BS, comprise:
- Adjacent Channel Leakage Ratio (ACLR)
- Spectrum Emission Mask (SEM)
- Spurious emissions
- In-band unwanted emissions

The specific definition and the specified level of these requirements can vary from one system to another. Typically these requirements ensure that the emission levels outside an operating bandwidth or band in some cases remain several tens of dB below the emission levels of the wanted signal in the operating bandwidth. Although OOB and spurious emission levels tend to decay dramatically further away from an operating band, they are not completely eliminated, at least not in the adjacent carrier frequencies.

The major RF receiver requirements comprise:
- Receiver sensitivity
- Adjacent Channel Selectively (ACS)
- In-channel selectivity
- Spurious emissions
- Blocking: in-band, out-of-band, narrow-band

The receiver and transmitter radio requirements to be met also depend upon whether a frequency band is used for public safety or for commercial purposes. In the former case a number of radio requirements may be less stringent.

### RF Exposure to Human

There exist also requirements to limit human exposure to RF Electromagnetic Fields (EMF) which are transmitted by the UE. The most important guidelines on RF exposure to human are from the International Commission on Non-Ionizing Radiation Protection (ICNIRP, 1998) and from the Institute of Electrical and Electronics Engineers (IEEE, 1999). The limits in these recommendations are similar and they have been used as the basis for national standards and regulations in many countries. The ICNIRP guidelines, which are the most widely used recommendations, have been endorsed by the World Health Organization (WHO). These RF exposure guidelines are science-based and the prescribed limits have been set with substantial safety margins. They provide protection from all established health effects from short-term and long-term exposure to RF fields, and the safety of children and other segments of the population have been taken into account. Specific Absorption Rate (SAR) is introduced to measure impact on the human body from the exposure of RF EMF transmitted by the UE. SAR is a measure of the maximum energy absorbed by a unit of mass of exposed tissue of a person using a mobile phone, over a given time or more simply the power absorbed per unit mass. Advised by ICNIRP, the communication administration departments of different countries issued the SAR limits. For instance, the FCC has determined that the SAR limit is 1.6 W/kg for a cell phone. The SAR limit in Europe and in most of countries is 2 W/kg.

The RF exposure requirements to be met also depend upon whether a frequency band is used for public safety or for commercial purposes. In the former case a number of RF exposure requirements such as SAR may be less stringent or even exempted for the UE.

### Multi-Carrier or Carrier Aggregation Concept

Multi-carrier or Carrier Aggregation (CA) solutions are known concepts to enhance peak-rates within a technology. It is for example possible to use multiple 5MHz carriers in High Speed Packet Access (HSPA) to enhance the peak-rate within the HSPA network. Similarly, in LTE, multiple 20 MHz carriers or even smaller carriers such as 5 MHz carriers may be aggregated in the UL, in the DL, or in both UL and DL. Each carrier in multi-carrier or CA systems is generally referred to as a Component Carrier (CC) or sometimes as a cell. A CC thus simply speaking corresponds to an individual carrier in a multi-carrier system. CA is sometimes instead called multi-carrier system, multi-cell operation, multi-carrier operation, or multi-carrier transmission and/or reception. CA is thus used for transmission of signaling and data in the UL and DL directions. One of the CCs is referred to as a Primary CC (PCC), a Primary cell (PCell), or simply as a primary or anchor carrier. The remaining CCs are called Secondary CCs (SCCs), Secondary Cells (SCells) or simply secondary or supplementary carriers. Generally the PCC carries the essential UE specific signaling. The PCC exists in both UL and DL directions in CA. In case there is single UL CC the PCC is obviously on that CC. The network may assign different PCCs to different UEs operating in the same sector or cell. Regardless of the terminology, the PCell and SCell(s) enable the UE to receive and/or transmit data. More specifically the PCell and SCell exist in DL and UL for the reception and transmission of data by the UE. The remaining non-serving cells on the PCC and SCC are called neighbor cells.

The CCs in the CA system may belong to the same frequency band, which is also known as intra-band CA, or to different frequency band also known as inter-band CA. It may also be a combination, such as two CCs in frequency band A and one CC in frequency band B. The inter-band CA with CCs distributed over two bands is also called dual-band-dual-carrier-High Speed Downlink Packet Access (DB-DC-HSDPA) in HSPA or inter-band CA in LTE. Furthermore the CCs in intra-band CA may be adjacent, so called intra-band adjacent CA, or non-adjacent, so called intra-band non-adjacent CA, in the frequency domain. A hybrid CA comprising of intra-band adjacent, intra-band non-adjacent and inter-band is also possible. Using CA between CCs of different technologies is also referred to as multi-Radio Access Technology (RAT) CA, multi-RAT-multi-carrier system, or simply inter-RAT CA. For example, the CCs from Wideband Code Division Multiple Access (WCDMA) and LTE may be aggregated. Another example is the aggregation of LTE and Code-Division Multiple Access 2000 (CDMA2000) CCs. For the sake of clarity the CA within a same technology can be referred to as intra-RAT or single RAT CA.

Multi-carrier operation may also be used in conjunction with multi-antenna transmission. As an example, signals on each CC may be transmitted by the eNodeB to the UE over two or more antennas.

The CCs in a CA system may or may not be co-located in the same site, base station, or radio network node, such as a relay, or mobile relay. For instance the CCs may originate from different locations, e.g. from non-located base stations or from base stations and Remote Radio Heads (RRH) or Remote Radio Units (RRU). Some well known examples of combined CA and multi-point communication are Distributed Antenna Systems (DAS), RRH, RRU, Coordinated Multi Point (CoMP), and multi-point transmission/reception.

### Cross carrier scheduling

Cross carrier scheduling, 210, is based on a CA mode where a terminal receives or transmits on multiple CCs, 211-213. The use of cross carrier scheduling may be enabled individually via Radio Resource Control (RRC) signaling on a per-terminal and per-CC basis as illustrated in **Figure 2a****.** In the absence of cross-carrier scheduling, 200, DL scheduling assignments are valid for the CC, 201-203, upon which they are transmitted, as illustrated by the arrows. Furthermore, for UL grants, there is an association between DL and UL CCs such that each UL CC has an associated DL CC. In the presence of cross carrier scheduling, 210, where a Physical DL Shared Channel (PDSCH) or a Physical UL Shared Channel (PUSCH) is transmitted on an associated CC other than the one carrying the Physical DL Control Channel (PDCCH), the carrier indicator in the PDCCH provides information about the CC used for the PDSCH or PUSCH. In **Figure 2a** the PDCCH on CC 212 comprise a carrier indicator indicating CC 211 or 213 in a cross-carrier scheduling, as illustrated by the arrows.

### New carrier type

New Carrier Type (NCT) has be approved as a work item in 3GPP LTE-Advanced Release 12 standardization to enhance energy efficiency, improve the throughput in macro and heterogeneous networks, and support lower bandwidth machine type devices. NCT can be standalone or CA-based. The NCT is used as a secondary CC when used with CA. The new carrier does not have to contain PDCCH, Physical Hybrid Automatic Repeat Request Indicator Channel (PHICH) and Physical Control Format Indicator Channel (PCFICH), and the control information is provided by enhanced control channels such as enhanced PDCCH and enhanced PHICH. In CA mode, the main design principles are to minimize mandatory transmissions. For example, there may be no Cell-specific Reference Signals (CRS) or there may be reduced CRS density in time and/or in frequency domain. Demodulation of data channels by the UE, and Channel Status Information (CSI) feedback, such as Channel Quality Index and Rank Indicator, are based on UE specific Demodulation Reference Signals (DM-RS) and CSI-Reference Signals respectively. Furthermore, NCT also provides the configurability of all essential signals such as synchronization signals and reference signals. By the virtue of reduced signal overhead, the energy efficiency will be increased compared to a normal carrier type. Especially when the new carrier type is configured as a SCC in CA mode, the amount of resource available for data scheduling and transmission is increased due to decrease in control channel overhead. This in turn improves the spectrum efficiency.

### Public safety operation

A Public Safety Network (PSN) is a wireless communications network used by emergency services organizations, such as police, fire and emergency medical services, to prevent or respond to incidents that harm or endanger persons or property. A Public Safety (PS) situation, which may also be referred to as a warning situation, comprises of any type of natural and/or manmade disaster or accident such as an earthquake, a tsunami, a fire, a flood, an act of terrorism, or an industrial catastrophe. A PS warning content provider, such as an Earthquake Tsunami Warning System (ETWS), collects information related to a warning, such as earthquake information from a seismic sensor, and relays it to emergency points and other relevant alerting systems or nodes such as a PSN.

The simple traditional way of using licensed frequency bands is that two license holders use their own frequency band independently. As **Figure 2b** shows, the entire PS frequency band is configured as a single standalone carrier, 220, for the PSN while a Commercial Network (CN) uses its own dedicated carrier, 230. The two networks operate independently and transmit their own control channels to enable respective wireless communications.

Due to the intense increase in the demands of the radio spectrum, it is necessary to use the radio spectrum as efficiently as possible. However, regulatory bodies in the world, including the Federal Communications Commission (FCC) in the United States and Office of Communications (Ofcom) in the United Kingdom, found that most radio frequency spectrum was inefficiently utilized. One example is when a certain frequency band is licensed to an operator in a certain region and used in a first network. Other networks in the same region are then prevented to use this frequency band to avoid interference towards the first network according to the current spectrum allocation policy. However, traffic load may be low in the first network in a certain region or during a certain time of the day, while other networks deployed in the same region as the first network may need more capacity to meet the requirements and demands of their subscribers. This traditional policy of spectrum utilization results in a substantial wastage of the spectrum. Therefore, new innovative authorization schemes and implementations should be designed to solve the problem of enabling more efficient use of the radio spectrum.

PSNs with assigned frequency bands almost always have bursty traffic due to the use for PS situations such as fire alarms, traffic accidents, natural disasters, and earth quakes, which occur unexpectedly and generally occasionally. The existing PS wireless communication systems are typically assigned a narrow bandwidth, ranging from 6.25 to 25 kHz bandwidth depending on the part of the allocated spectrum. They are also referred to as narrowband PS systems. Broadband communication for PS is a critical issue addressed by FCC's National Broadband Plan (NBP) in the USA. In accordance with the Budget Act of 1997, FCC has allocated 24 MHz of dedicated spectrum for PS in the 700 MHz band. In this band, 10 MHz (UL=763-768 MHz and DL = 793-798 MHz) is licensed for PS broadband communication. Considering that 10 MHz spectrum would not guarantee PS with sufficient capacity for the emergency services in the worst PS situations, a national license for 700 MHz upper D-Block (UL=758-763 and DL=788-793 MHz) was established in 2007 for commercial broadband use, while PS will have preemptive access to this spectrum during emergency. But the minimum bid was not reached for this D-Block frequency band in 2008. Therefore, Middle Class Tax Relief Act (2012) recently re-allocated the D-block frequency band for PS use and established a First Responder Network Authority (FirstNet) as the new license holder for this D-block frequency band along with the original PS band, i.e. UL = 758-768 and DL = 788-798 MHz. The PS frequency band thus fully overlaps with the 3GPP LTE band 14 (UL = 758-768 MHz and DL = 788-798 MHz). Therefore, the LTE technology or a future technology based on LTE is a natural choice to establish national broadband PSN in this PS band (3GPP band 14). How to use this band to establish an efficient LTE network or evolved LTE network is currently an urgent problem being addressed by FCC.

Not sharing spectrum between CN and PSN as described above with reference to **Figure 2b****,** may lead to the following disadvantages:
1. The average spectrum utilization efficiency will be very low. As the PSN in most cases have traffic load in bursts, most of the spectrum will be wasted when there is low traffic in a PSN.
2. The cost of the network and the associated mobile devices could increase significantly if the spectrum resources are sparsely used. Equipment vendors would not be able to rely on the broader commercial LTE market in PS band e.g. LTE frequency Band 14. Accordingly, equipment costs could be much higher due to lower economy of scales.
3. Without a commercial partner for operation in a band which is used for PS such as Band 14, a vendor may have less incentive to develop a technology for such bands. This in turn will significantly increase the cost of the PSN and devices. This will also lead to slower technological evolution of the PSN based on broadband LTE network, unless the spectrum can be reused for other purposes to generate revenues.

### SUMMARY

It is therefore an object to address some of the problems outlined above, and to provide a solution for sharing one or more frequency carriers of a PSN with a CN. This object and others are achieved by the methods and the nodes according to the independent claims, and by the embodiments according to the dependent claims.

In accordance with an aspect, a PSN node configured to share one or more frequency carriers of a PSN with a CN is provided. The PSN node comprises a processing circuit and a communication interface connected to the processing circuit. The processing circuit is configured to obtain information indicating a level of warning in the PSN, and determine whether a PSN carrier is available for use in the CN based on the obtained information. The information comprises at least one of a type of a warning situation, a severity level of the warning, a duration of the warning, and an area or location affected by the warning. When it is determined that the PSN carrier is available for use in the CN, the processing circuit is configured to release the PSN carrier from operation in at least one node of the PSN, and send information via the communication interface to a CN node indicating that the PSN carrier is available for use in the CN.

In accordance with a further aspect, a CN node configured to share one or more frequency carriers of a PSN is provided. The CN node comprises a processing circuit and a communication interface connected to the processing circuit. The processing circuit is configured to receive, via the communication interface, information from a PSN node indicating that a PSN carrier is available for use in the CN. The availability of the PSN carrier is determined by the PSN node based on information indicating a level of warning in the PSN. The information comprises at least one of a type of a warning situation, a severity level of the warning, a duration of the warning, and an area or location affected by the warning. The processing circuit is further configured to admit the PSN carrier for operation in the CN.

An advantage of embodiments is that the overall spectrum efficiency or spectrum utilization of the PS band is significantly improved due to flexible spectrum sharing between PSN and CN, when there is no or minimal traffic activity in the PSN.

Enabling sharing of frequency carriers between PSN and CN also has the advantage of reduced cost for both PSN and CN. Furthermore, PSN may generate revenues when there is no or minimal PS situation by resource sharing with commercial partners. At the same time, an advantage of embodiments is that it is ensured that the shared resources become readily available for PS operation under a PS or warning situation.

Other objects, advantages and features of embodiments will be explained in the following detailed description when considered in conjunction with the accompanying drawings and claims.

### BRIEF DESCRIPTION OF THE DRAWINGS

**Figure 1** is a schematic illustration of an LTE radio access network.
**Figure 2a** is a schematic illustration of cross-carrier scheduling.
**Figure 2b** is a schematic illustration of a conventional way of using a PS band in a dedicated spectrum not used for any purpose other than PS situations.
**Figure 3** is a schematic illustration of a network architecture with both PSN and CN.
**Figure 4** is a schematic illustration of a standalone operation of PSN carriers in CN according to embodiments.
**Figure 5** is a schematic illustration of a CA operation of PSN carriers in CN according to embodiments.
**Figures 6a****-b** are flowcharts illustrating the method in a PSN node according to embodiments.
**Figures 7a****-b** are flowcharts illustrating the method in a CN node according to embodiments.
**Figure 8** is a block diagram schematically illustrating a PSN node and a CN node according to embodiments.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the embodiments are primarily described in the form of a method and a node, they may also be embodied in a computer program product as well as in a system comprising a computer processor and a memory coupled to the processor, wherein the memory is encoded with one or more programs that may perform the functions disclosed herein.

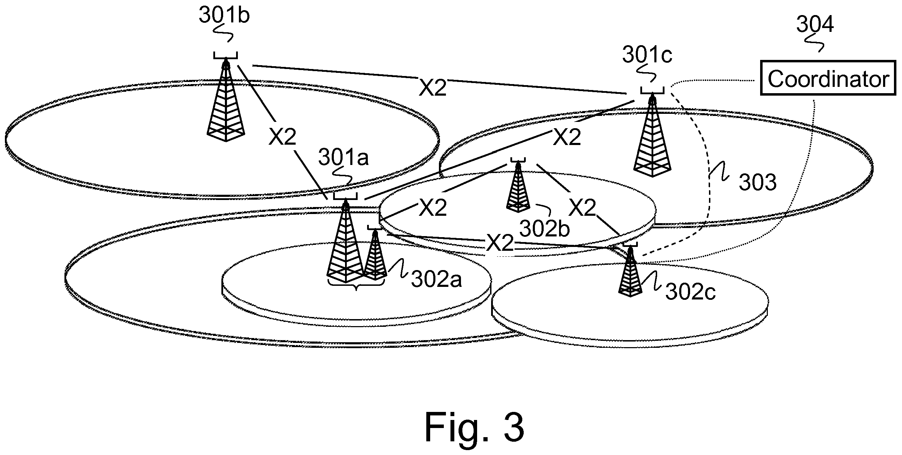

Embodiments are described in a non-limiting general context in relation to an example scenario as the one illustrated in **Figure 3****,** where two E-UTRANs operating in a same coverage area are considered. One network is a PSN whose eNodeBs 301a-c are denoted P-eNB, and the other one is a CN whose eNodeBs 302a-c are denoted C-eNB. However, embodiments may also apply to other radio acces technologies and to multi-point CA systems, i.e. to each CC in CA, or in a CA combination with CoMP.

In prior art, spectrum sharing between different networks, e.g. operated by different operators, is typically based on some sort of absolute priority. This implies that a first system with higher priority over a second system uses the shared spectrum when there is traffic in the higher priority first system. This classical approach is not feasible for sharing spectrum between CN and PSN, as the PSN may need to keep the spectrum for PS purposes although there is no traffic load in the PSN.

The problem of how to share a spectrum between CN and PSN in a safe and efficient way is addressed by a solution where access to the shared spectrum is given to the PSN when there is a warning or PS situation, regardless of the PSN traffic load. On the other hand, access to at least a part of the shared spectrum is given to the CN when there is neither a warning or PS situation, nor any traffic in the PSN. The solution requires a method performed in a PSN node, i.e. in a node operating in a PSN, and a corresponding method performed in a CN node, i.e. a node operating in a CN.

In summary, embodiments of the method in the PSN node may comprise:
- Observing PSN traffic and warning situation e.g. autonomously or based on information received from another node in the PSN or from a PS warning content provider;
- Determining that one or more PSN carriers are available for CN provided that the level of warning and the PSN traffic load are below their respective thresholds. This step may further comprise:
   ∘ Providing information about the available PSN carriers to CN.
   ∘ Releasing the available PSN carriers, e.g. turning off control channels and physical signals.
   ∘ Informing other network nodes and/or UE in PSN that one or more PSN carriers are released to CN for commercial use.
- Determining that one or more PSN carriers currently used by the CN are required for PSN provided that at least the warning level is above a warning threshold. This step may further comprise:
   ∘ Sending a request to the CN to release one or more PSN carriers currently used by the CN, such that it/they can be reinstated for the PSN operation.
   ∘ Receiving an indication from the CN that the PSN carriers are not used by CN anymore.
   ∘ Informing UE and/or other network nodes operating in PSN about the reinstated PSN carriers.
   ∘ Establishing communication on the reinstated PSN carriers using standalone or CA based operation, e.g. turning on control channels and signals.
   ∘ Informing other network nodes and/or UE in PSN that one or more PSN carriers have been reinstated for PS operation.
- Determining further the need for retrieving additional PSN carriers from the CN provided that the PSN traffic load is also above a traffic threshold. This step may further comprise:
   ∘ Repeating the above steps for retrieving additional PSN carriers from the CN for reinstating them for PS operation.

Embodiments of the method in the CN node may comprise:
- Obtaining information about one or more PSN carriers available for use for CN operation e.g. based on an indication received from a PSN node or from another coordinating node in the PSN or the CN.
- Informing UE and/or other network nodes operating in CN about the availability of the one or more PSN carriers.
- Establishing communication on the indicated available PSN carriers in the CN using standalone or CA based operation e.g. turning on control channels and signals.
- Informing other network nodes and/or UE in CN that one or more new PSN carriers are available for commercial use.

This means that during a PS situation, e.g. when a disaster is expected due to a hurricane forecast, the disclosed method embodiments ensure that at least part of the shared spectrum is available to the PSN for the PS operation, even if there is no ongoing PSN traffic. In other words when there is a warning such as a fire alarm from a near area in a PSN, at least certain parts of the shared spectrum is retrieved from the CN for an impending PSN operation even when the PSN currently does not have any traffic. If there is also ongoing traffic in PSN, the PSN may retrieve the entire or at least a larger part of the shared spectrum from the CN for the PS operation. Furthermore, the shared spectrum may be associated with radio requirements which depend upon whether the spectrum is used for CN or for PSN. The result is that UE and radio network nodes may have to meet different radio requirements when operating in CN and in PSN respectively.

The above summary of the embodiments of the methods in the PSN node and in the CN node respectively, are presented in detail in the following two sections. The first section covers the determining of PSN carriers available for CN operation, and the second section covers the details of the sharing of carriers between the PSN and the CN.

### Determining and Indicating PSN Carriers Available for CN operation

As illustrated in **Figure 3****,** two E-UTRANs operating in a same coverage area are considered. One network is a PSN whose base stations 301a-c are denoted P-eNB, and the other one is a CN whose base stations 302a-c are denoted C-eNB. The P-eNB and C-eNB may be co-located, as base stations 301a and 302a in the **Figure 3****,** or not co-located as base station 301b and 302b. Traditionally, these two networks operate in different spectrum bands respectively.

In order to achieve spectrum sharing between the PSN and the CN, the PSN first determines that the shared PSN spectrum is not in a process of being used and therefore is available, and secondly informs the CN about the PSN spectrum availability. These two steps are elaborated in the following sub-sections.

### Determining PSN carrier availability

As a first step a suitable network node, such as an Operations Support System (OSS) node, and Operation and Maintenance (O&M) node, a Self-Organizing Network (SON) node, or a warning content providing node, connected to the PSN, or a network node, such as an eNodeB, a relay, or a base station in a PSN, observes whether there is a PS situation in the PSN, and optionally also if any of its PSN carriers are unused or sparsely used for PSN operation. The PSN carrier availability may e.g. be determined for all cells on each carrier, on subsets of cells, or on cells located at a certain location. The PSN carrier availability herein means whether one or more PSN carriers are available for CN operation.

More specifically, what is needed to determine the PSN carrier availability in a network node operating in the PSN or connected to a PSN, is one or more of the following:
- Obtaining information related to the PS situation from one or more warning content providing nodes, such as an ETWS server or an emergency server. The obtained information may comprise at least one of: a type of warning situation e.g. earthquake, a warning level or a severity level of the warning, duration of the warning, and areas or locations affected by the warning.
- Observing a traffic situation, activity, or traffic behavior in PSN, e.g. of UEs using PSN. According to one example, if there is no traffic on a carrier or the traffic load is below a certain traffic threshold over certain time periods in at least certain cells, a PSN carrier is assumed to be unused for PSN and may be considered available for CN operation. The traffic can be determined by observing, e.g., the amount of outstanding data in buffers, or measurement reports related to buffer size received from the UE. Similarly the network node may also observe specific traffic patterns which occur in warning or PS situations. Examples of such specific traffic patterns are: sudden increase in traffic demand, high intensity of mobile originating calls in specific areas, very high demand for location based services, very high increase in the number of emergency calls and in the number of emergency or PS related requests, and increase of activity of devices involved in rescue and/or assistance. The above mentioned traffic situations or traffic patterns may be logged and stored at a register in a network node, and may trigger an event that indicates that shared PSN carriers are unavailable;
- Determining based on the observed PS traffic and/or the obtained information related to the PS or warning situation that at least one carrier in PSN is not currently used for PS purposes at least in certain cells or part of the PSN.

In one example embodiment, if there is no PS or warning situation, which may correspond to that a level of warning is below a warning threshold, and if the traffic situation indicates a low traffic load or that the traffic load is below a traffic threshold level in the PSN, then one or more PSN carriers are determined to be available for commercial operation and can therefore be shared with the CN temporarily. Furthermore, if one or more of the carriers of the shared PSN spectrum are already used by the CN, and if there is a warning situation, or a level of warning is above the warning threshold, or if there is traffic or the traffic load is above the traffic threshold level in the PSN, then the one or more PSN carriers currently used for commercial operation by the CN have to be released and reinstated for PSN operation. This is done to secure PS related services such as emergency calls, assistance, and rescue.

### Signaling PSN carrier availability information to CN

### A. Method in PSN node or other node connected to PSN:

Upon determining the availability of PSN carrier(s), a suitable network node such as an OSS node, an O&M node, a SON node, or a warning content providing node connected to the PSN, or a network node in the PSN, informs the CN about the carrier availability. The method comprises one or more of the following steps:
- If at least one PSN carrier is determined to be available for commercial use, informing a network node(s) operating in the CN about the available carrier. This may be done after performing actions needed for releasing the carrier in the PSN. This signaling may be done via a suitable distributed interface, such as via the direct inter-network X2 interface, 303, illustrated in **Figure 3****,** in a distributed or a semi-centralized solution or architecture. Alternatively, it may be done via a coordinator, 304, in a centralized solution or architecture. The information may comprise a simple notification about or indication of the available carrier, and/or cell information such as a carrier frequency, e.g. EARFCN, a cell identity such as a physical cell identity and/or E-UTRAN Cell Global Identifier (ECGI), a location of network nodes, a coverage area, and identities of network nodes. More comprehensive information about the available PSN carriers may also be provided, as described hereinafter.
- Optionally providing the network node(s) operating in a CN with additional information related to the carrier(s) available for commercial use, where the additional information comprises at least one of the following: location information such as geographical coordinates of the coverage area, network node identifiers, duration or time period over which the carrier(s) are available for commercial use, the allowed radio transmission characteristics such as: maximum output power of a radio node; UL and/or DL transmission bandwidth; and maximum allowed bit rate in UL and/or DL.

Furthermore, when a PSN carrier is shared and in use in the CN, the PSN node may also have to inform the network node(s) operating in the CN that previously available PSN carriers, are required for PSN operation again due to a newly detected PS situation.

The network node in PSN may send the information related to the PSN carrier availability to a network node in CN in any of the following manners:
- Proactively without receiving any explicit request from another network node, such as a neighboring or other network node. Proactive reporting may be done e.g. when certain conditions are met, when a criterion is fulfilled, or when an event occurs. In one example embodiment, a low level of PSN traffic may indicate a low level of warning, thus triggering a proactive transmission of information to the CN indicating a PSN carrier availability.
- Only upon receiving any explicit request from another network node in CN. The explicit request can be received by the PSN node from the other network node in CN anytime or at a specific occasion. For example, when the CN has a high demand in traffic then it may send a request to the PSN or to any network node that can communicate with the PSN.

### B. Method in CN node upon obtaining information related to PSN carrier availability:

One or more network nodes, such as an eNodeB, a BS, or a relay, operating in the CN may take one or more actions when they receive information about the availability of one or more PSN carriers. The method in the CN node may comprise at least one of the following:
- Obtaining information that one or more carriers primarily assigned for PSN are available for commercial use via a suitable distributed interface such as a direct inter-network X2 interface in a distributed or semi-centralized architecture, or via the coordinator in a centralized architecture.
- Obtaining additional information related to one or more carriers primarily assigned for the PSN, but available for commercial use in the CN. The additional information may comprise one or more of: location information, network node identifiers, duration or time period over which the carrier(s) are available for commercial use, and the allowed radio transmission characteristics, as already described above.
- Using the one or more indicated available PSN carrier for spectrum sharing. The procedure for using the PSN carriers in the CN will be further described hereinafter in the section "Sharing available PSN carrier(s) with CN".
- Forwarding the obtained information to other network nodes in the CN and/or to UEs in the CN, e.g. to nodes serving the UEs operating in the CN via an intra-network X2 interface. The nodes and/or UEs receiving this information may use it in a spectrum sharing situation.
- Sending a request to a suitable node in the PSN, requesting information whether one or more PSN carriers are available for CN operation. The node in the CN may also indicate the purpose and/or method of using the PSN carrier. The PSN carrier may e.g. be used for standalone operation, or for CA via cross carrier scheduling, as described below in the section "Sharing available PSN carrier(s) with CN". The network node in the CN may also provide additional information related to expected usage of the PSN carriers in the request to the PSN node. This additional information may comprise the location, the area, or the network nodes in the CN where the available PSN carriers are needed to meet the traffic demand in the CN.

### C. Exchanging information in different architectures:

The method of exchanging information related to available PSN carriers between PSN and CN may depend upon the type of network architecture and topology, as briefly indicated above. There are essentially three possible different types of network architectures to enable information exchange between the PSN and the CN. The corresponding impact on the signaling is described hereinafter:
1. Distributed architecture: In this case communication is established between distributed radio nodes such as eNodeBs of the PSN and the CN. If two eNodeBs in the PSN and the CN are co-located, as e.g. P-eNB 301a and C-eNB 302a in **Figure 3****,** the inter-network X2 interface is easily established to exchange information. If not co-located, as e.g. P-eNB 301c and C-eNB 302c, they can also optionally establish an inter-network X2 interface 303 as needed. The eNodeBs between two networks can exchange information directly via one X2 interface, as e.g. P-eNB 301a and C-eNB 302a, or indirectly via multiple hops of X2 interfaces, as e.g. P-eNB 301c and C-eNB 302b, without a centralized control. In this distributed architecture, each eNodeB in two networks make their own decisions whether to use the shared spectrum according to the collected or obtained information related to the available PSN carriers.
2. Centralized architecture: In this case a centralized coordinator entity 304 in a certain coverage area is established to collect or send information by connecting the PSN and CN networks. Each eNodeB or other network node in the two networks will send or receive information to or from the coordinator 304 directly or via their own core networks. In this centralized architecture, the coordinator 304 will make the decision whether to use the shared spectrum and tell the results to corresponding network nodes by signaling.
3. Semi-centralized architecture: This architecture is a combination of the distributed and the centralized architecture. Each network node may receive information from a nearby network node of other networks via the established inter-network X2 interface 303 or from the coordinator 304. The coordinator may also provide a suggestion for whether to use the shared spectrum or not. Each network node in the CN makes the final decision whether to use the available PSN carrier or not based on all of the collected information. For example the collected information may reveal that certain PSN carrier is available for CN operation over certain duration e.g. only for 10 minutes. The CN nodes may decide to use the PSN carrier for CN operation provided that the traffic demand is very high. Similarly collected information may reveal that a certain PSN carrier is available for CN operation only in a limited number of cells or at a certain location and over a certain duration. The CN nodes may decide to use a PSN carrier for CN operation only if the UE speed is low, since the probability for a cell change is low in this case. The cell change may be a handover, a cell reselection, a PCell change, a PCC change, or an RRC connection release with redirection.

### Sharing Available PSN Carrier(s) with CN

The sharing of PSN carrier(s) with the CN means that the PSN carrier(s) fundamentally belonging to the PSN may be used by the CN for commercial application when they are available and not needed by the PSN. Typically, PSN and CN operations are associated with different types of services, applications and radio requirements. Therefore the operation of the radio nodes and/or UEs using a shared carrier may depend upon whether the shared carrier is used for PSN or for CN. Examples of differences between the networks are:
- A carrier used for CN is typically required to meet more stringent UE and/or radio network node radio requirements than those required to be met by the same carrier when used for PSN. This is because the PSN operation is more sensitive and critical as it involves safety of public and their property. For example, the base station may be required to meet more stringent unwanted emission level when used for CN compared to when used for PSN on the same carrier or on a carrier within the same frequency band.
- A wireless device and/or a radio network node when operating on a carrier for PS may be allowed to not meet certain radio requirements. For example a wireless device used for PS on carrier f1 may not be required to meet the SAR requirements even if its transmission power level is above a SAR requirement limit. However the same wireless device when operating on the same carrier f1 for commercial use has to meet the SAR requirements.

Two different methods of sharing the PSN spectrum or carriers between PSN and CN including corresponding actions by the UE are disclosed and described in the following sections. The first is a method of stand-alone operation of the carrier, and the second one is a method of using the shared carrier for CA operation.

### Method of Standalone Operation of PSN Carrier(s) in CN

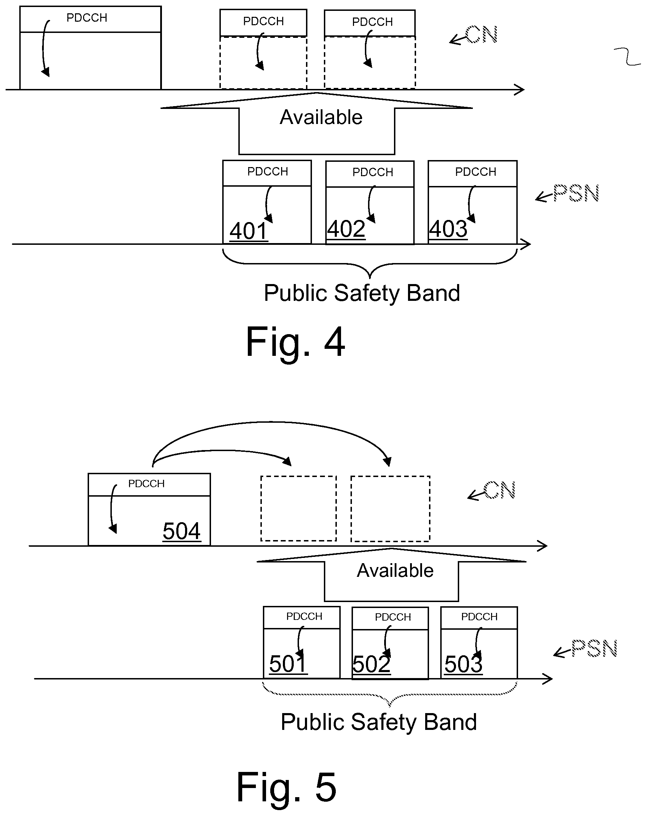

The method of dynamically or semi-dynamically sharing the radio spectrum or the frequency band between the CN and the PSN is illustrated in **Figure 4****.** The figure shows that multiple standalone carriers, 401, 402, 403, are configured for the PS band for the PSN. Each carrier serves UEs in multiple cells in a coverage area or in a part of the network. The carriers may or may not be co-located. In a co-located deployment scenario the carriers are operated either by the same radio node, e.g. the same eNodeB, or the radio nodes operating the carriers are physically located at the same location or site. In the latter case such radio nodes are also interchangeably called co-located radio nodes. The co-located carriers though may or may not be operated using the same antennas. However, even in case of non-co-located scenarios, typically the carriers operate in the same coverage area or in the same geographical area. For example in one dense deployment scenario the non-co-located carriers may be separated by only few hundreds of meters, e.g. 100-300 meters, and in another sparse deployment scenario they may be separated by a few kilometers, e.g. 1-3 km. In **Figure 4****,** two of the three PSN carriers, 401 and 402, are available for use in the CN, and are used as stand-alone carriers also in the CN.

In order to enable sharing of the PSN with the CN, the below described actions or methods are performed in the network nodes operating in the PSN and in the CN. A same network node may also be fully or partly used for or shared between both PSN and CN. Therefore, different methods related to the PSN and the CN may be performed in a same shared network node.

### I. Method in a PSN node for releasing a PSN carrier for CN operation

When one or more PSN carriers are determined to be available for commercial use in the CN, the method in the PSN node which may be a P-eNB in **Figure 3****,** comprises one or more of the following steps. The UE may also perform one or more tasks in response to the actions taken by the network node.
- As already described in the previous section, the PSN node obtains information about the warning situation or the level of warning, and possibly also about the traffic in the PSN. If both the warning level is below the warning threshold and the PSN traffic load is below the traffic threshold, then the PSN node initiates a procedure for releasing one or more PSN carriers to the CN for the purpose of commercial use.
- The number of carriers to be released for CN operation may depend upon a level or intensity of the warning. As an example, at least one PSN carrier is always retained in the PSN if the warning level is above the warning threshold. The number of carriers to be released may also depend on the amount of traffic in the PSN. As an example, no PSN carrier is released if the PSN traffic load is above the traffic threshold.
- Upon releasing the PSN carriers by the PSN, the PSN node takes the following further actions to deactivate the PSN carriers for PS operation, and to enable corresponding activation operation in the CN:
   ∘ The PSN node broadcasts or signals a message informing the PSN UEs in RRC idle mode, thus without a connection to the PSN, that the current carrier serving the UE will be unavailable starting from a certain reference time, e.g. from next Sub Frame Number (SFN) = 0. The PSN node may also indicate the time period during which the carrier will be unavailable, e.g. 60 minutes starting from the reference time. The message may also be a simple indicator indicating that the carrier will be unavailable for PSN and/or will be available only for CN use. For PSN UEs in an RRC connected mode, which have an established connection to the PSN, the above messages can be sent to the UE on a UE specific channel such as a shared data channel, e.g. the PDSCH in E-UTRAN. The UEs in idle mode, which have made a cell selection using the PSN carrier that is to be released, may perform cell reselection to another carrier or RAT. The UEs receiving the above described messages may perform one or more actions, which may be pre-defined. In one example, the PSN UEs may access the carrier which is released and which is now allowed to be used by the CN for commercial operation. However, the UE must then meet the radio requirements which are to be met for the commercial operation. The UEs in RRC connected mode may decide not to send any more scheduling request to the PSN node for accessing radio resources for data communication. The UEs may even display an alert message on a screen or provide a text or visual indication informing or alerting the subscriber that the carrier or connection may be lost shortly. The alert message may also indicate that there may be some interruption.
   ∘ The PSN node turns off control channels such as PDCCH, and physical signals such as CRS on all PSN carriers which are determined to be available for use in the CN and which are not currently used by PSN for PS traffic.
   ∘ The PSN node signals on at least one carrier, which is retained for PS operation, a message informing the UEs operating in the PSN that the PSN carrier determined to be available for use in the CN is currently not used for PSN operation, but that it may become available for PSN operation starting from a certain reference time, e.g. 60 minutes after the next SFN = 64. This message can be signaled to the UEs in RRC idle mode in system information blocks (SIBs). The message can also be signaled to the UEs in RRC connected mode on a UE specific channel. The UEs may in response to this received message stop performing measurements on the cells operating on these carriers, as they will be unavailable for PSN operation at least until the indicated time, or until a pre-defined time if no time was indicted in the message to the UE. The pre-defined time can be a minimum time for how long a PSN carrier is released, which may be 10 minutes in one example.
   ∘ The available PSN carrier may be released in only a part of the PSN. Therefore the PSN node releasing the PSN carrier may also signal this information, i.e. a certain PSN carrier, e.g. indicated by a cell ID, together with information about a relevant time period, or a purpose of releasing the carrier, to other network nodes in the PSN. For example it may inform this to neighboring network nodes, or to a positioning node. The node receiving this information may use it for network operational tasks such as avoiding a cell change, and avoiding configuring positioning measurements. For example the node receiving the information may avoid performing cell change to the PSN carrier which is released in the PSN node.

### II. Method in a PSN node of reinstating PSN carrier for PSN operation

At least one of the following actions is performed in the PSN node when the shared carrier which was temporarily assigned to the CN has become available again for PS operation. There may also be corresponding actions performed in the UE depending on the type of network node actions:
- The PSN node may obtain updated information about the warning situation and/or traffic load in the PSN indicating that the PSN carriers shared with the CN are no longer available for use in the CN. If the warning level is above the warning threshold and/or the PSN traffic is above the traffic threshold then the PSN node initiates the procedure for retrieving one or more PSN carriers which were released for use by the CN for commercial purpose. The PSN node may send a message directly, or indirectly via another node, to the CN node requesting the CN node to release one or more of the shared PSN carriers. The actions in the CN node are further described in section IV below. The number of carriers requested to be retrieved and reinstated for PS operation depends upon a level or an intensity of warning. Typically, more PSN carriers are reinstated if the warning level is very high. The number of reinstated carriers may also depend on an amount of traffic in the PSN, e.g. more PSN carriers are reinstated if the PSN traffic is very large.
- Upon releasing the PSN carriers by the CN node, the PSN takes the following further actions to fully activate the PSN carriers for PS operation. The PSN node turns on control channels and physical signals on the reinstated PSN carriers. The PSN node may also indicate to UEs operating on one or more existing PSN carrier(s) that one or more new carrier(s) are available for use. The information may further comprise timing information such as a reference time for starting the operation on the new carriers. The information may also include cell information such as cell identities, and geographical location, e.g. Global Navigation Satellite System (GNSS) coordinates, of network nodes on which the new carrier(s) will resume operation. For example it may be indicated that a certain new carrier, such as carrier f2 in band 14, will start operation in the PSN from SFN = 128 of the serving cell of the UE in all network nodes located within a certain geographical area. The starting time may also be expressed as the absolute time, which the UE can derive from a global clock, such as GNSS timing. In response, the UEs can start detecting cells on the indicated carriers. They may also use location information to decide whether to search for such carriers or not.

- The PSN node may also configure its UEs using one or more of the retained or existing carriers in PSN to perform measurements on the reinstated PSN carrier(s). The PSN node may perform cell changes of one or more of its UEs to a cell on one reinstated PSN carrier based on e.g. radio measurements, carrier bandwidth, or traffic load. In this way the network can reduce traffic load on the existing carrier by performing load balancing. The UEs in RRC idle mode can perform cell reselection to a cell on one of reinstated PSN carriers based on e.g. radio measurement.
- The PSN node may also inform other network nodes in the PSN that one or more PSN carriers, which were previously released to the CN, are now admitted again, due to e.g. an increase of a level of warning, or to an increase in demand of the PS/emergency calls. The PSN node may for example inform neighboring network nodes or a positioning node. The node receiving this information may use it for one or more network operational tasks when required. Examples of network operational tasks are performing UE cell change, performing load balancing, and configuring positioning measurements.

### III. Method in a CN node of admitting PSN carrier for CN operation

The actions performed in a CN node such as a C-eNB illustrated in **Figure 3****,** when one or more PSN carriers are determined to be available and admitted for commercial use, comprise at least one of the following actions. There may also be corresponding actions performed in the UE depending on the type of network node actions:
- The CN receives an explicit message from another node or from a PSN node indicating that one or more PSN carriers are available for use in the CN. The message can be sent to the CN node proactively or in response to the request sent by the CN node as described above.
- The CN node turns on control channels and physical signals for the available PSN carrier.

- The CN node informs the UEs operating on a carrier belonging to the CN that a certain additional carrier is available for wireless communication. The information sent to the UE may further comprise timing information such as a starting time, duration of the availability, and a terminating time.
- The CN node configures its UEs in RRC connected mode on a CN carrier to do measurements on the newly available PSN carrier. The CN node may also perform cell change for some of the UEs in RRC connected mode to the available PSN carrier. The cell change may e.g. be a handover, an RRC connection release with redirection, or a PCell change. The cell change to the PSN carrier may be performed based on one or more criteria such as measurement result criteria, cell bandwidth criteria for the serving cell on the CN carrier and/or for the target cell on the PSN carrier, or cell load criteria on CN carriers. This load balancing allows for reduced load on the existing CN carriers.
- The CN node may also inform other network nodes in the CN that one or more PSN carriers are available for use in the CN, e.g. due to the absence of a warning or PS situation. The CN node may for example inform neighboring network nodes, or a positioning node about the available carrier. The node receiving this information may use it for performing one or more network operational tasks when required. Examples of network operational tasks are performing a UE cell change, performing load balancing, and configuring positioning measurements.

### IV. Method in a CN node of releasing a PSN carrier from CN operation

The CN node may receive a request from a node in the PSN or from another node communicating with the PSN that the PSN needs to operate on previously released PSN carriers which are in use in the CN. The CN will therefore release the indicated PSN carrier(s) to enable their operation for PS purpose. The CN may also release the shared PSN carriers after a pre-determined time period from the start of operation of the shared PSN carrier e.g. after 60 minutes. Alternatively, the CN node may release the shared PSN carriers periodically during a certain probing time period. As an example, the PSN carrier may be released every 20 minutes during 1-2 minutes of probing time period. If there is no need to use the released PSN carrier for PSN operation during the probing time period, then the CN will resume the operation. The pattern comprising the periodicity and the probing time period can be pre-defined or it can be configured by the network node. The pattern information can also be signaled to the UEs to make them aware of the possible interruption if their session overlaps with the probing time.

The CN may also obtain information about the level of warning and/or about the traffic in the PSN with which the spectrum is being shared. If the warning level is above the warning threshold and the PSN traffic load is above the traffic threshold, the CN releases one or more PSN carriers.

The actions performed in the CN node when a PSN carrier is reinstated for PSN operation and thus no longer available for commercial use in the CN, e.g. due to an increased level of warning in the PSN or due to increased load in the PSN, comprise at least one of the following actions. There may also be corresponding actions performed in the UE depending on the type of network node actions:
- The CN node de-configures the PSN carrier that is to be reinstated for operation in the CN. For example the CN node may signal an indicator or a message to the UEs indicating that the carrier is unavailable for use. It may be pre-defined that as a consequence of such indication the UEs will not be allowed to send new access requests such as random access, and scheduling requests, to the indicated PSN carrier or at least not to do so in certain cells on the indicated PSN carrier. The above message is sent on the PSN carriers that are being released. The above message may also be sent to the UEs on carriers belonging to the CN to prevent UEs from accessing the PSN carriers that are being released. The procedure to de-configure PSN carriers in a CN node may last until all the existing sessions or calls of all the existing UEs are successfully completed, or until the existing UEs are served by another carrier or RAT as explained below. The CN node will in any case not admit new UEs and will stop sending scheduling request to the UE for uplink and/or downlink transmissions.
- The CN node triggers cell change of the UEs operating on the PSN carriers that are being released. The triggering can be performed by sending a message on a broadcast channel for UEs in RRC idle mode and on a UE specific or dedicated channel for UEs in RRC connected mode. The cell change may be an intra-frequency cell change, an inter-frequency cell change, or an inter-RAT carrier cell change.
- The CN node turns off control channels and physical signals on the PSN carrier being released.
- The CN node releasing a PSN carrier may also signal information related to the released PSN carrier, such as a cell ID for the PSN carrier, a time period, and a purpose of releasing the carrier, to other network nodes in the CN. For example it may inform neighboring network nodes. The node receiving the information may use it to decide whether to perform one or more network operational tasks or not, e.g. avoiding UE cell change to the PSN carrier that is released, and avoiding configuring positioning measurements on it. In this way, performing cell change to a carrier which is being released may be avoided.

### Method of CA Operation of PSN carrier in CN

The CA operation method is illustrated in **Figure 5**. The PSN is configured with multiple standalone carriers, 501, 502, 503, in a PS band while exploiting the CA operation. The difference with previous section lies in that the sharing of carriers between the PSN and CN is performed via cross-carrier resource scheduling by the CN nodes, when one or more PSN carriers are available for use in the CN, such as carriers 501 and 502 in the illustrated example. The cross-carrier resource scheduling is based on CA. The CA comprises a primary carrier which is preferably one of the dedicated carriers in CN, 504, and one or more secondary carriers, where at least one of the secondary carriers correspond to one of the PSN carriers, 501, 502, available for use in the CN. The secondary carriers can also be of a new carrier type, i.e. a carrier with no or reduced control channels such as PDCCH, and no or reduced physical signals such as CRS.

The specific actions performed in CN and PSN to enable the use of available carriers in PSN for CA operation are described below.

### i. Method in the PSN node of releasing PSN carriers for CN operation and reinstating PSN carriers for operation in PSN

Due to that the carriers are standalone in PSN, the actions performed in the PSN node are the same as described above in the stand-alone operation method.

### ii. Method in a CN node of admitting PSN carrier for CN operation

The actions performed in the CN node when one or more PSN carriers are determined to be available for use in CN comprise at least one of the following actions:
- The CN node receives information that one or more PSN carriers are available for commercial purpose as described above. The CN node reconfigures a carrier belonging to CN as a primary carrier and the available PSN carrier as a secondary carrier, preferably of the NCT, for one or more UEs in RRC connected mode which are CA capable.
- The CN node turns on control channels and physical signals. All physical channels and signals are turned on over the new carriers if the new carriers are of the normal carrier type i.e. as in legacy systems. A subset of relevant physical channels and signals are turned on over the new carriers if the new carriers are of the NCT. The subset may comprise e.g. reference signals with reduced periodicity and DM-RS.
- The CN node performs cross-carrier scheduling on serving cells to the CA UEs configured with a PCell and at least one SCell on the admitted PSN carrier.
- The CN node may also inform other network nodes in the CN that one or more PSN carriers are now available for commercial use with CA, e.g. due to absence of a warning or PS situation. It also indicates that the new carriers will be used only as secondary carriers for CA. The CN node may indicate that the CA capable UE will be assigned resources according to a specific type of scheduling scheme, e.g. cross carrier scheduling on the new secondary carriers. The node receiving this information may use this for performing one or more network operational tasks when required.

### iii. Method in a CN node of releasing a shared PSN carrier from CN operation

The actions performed in the CN node when the shared PSN carrier is to be reinstated for PSN use comprise:
- The CN receives an explicit or implicit message from another node such as a coordinator node in either of the networks or from a node in a PSN, requesting the CN to release one or more PSN carriers, i.e. to stop using them for commercial purpose. The explicit message may comprise an indicator or a request to release the PSN carriers. The implicit message may alternatively comprise an indication about the warning situation and/or the traffic situation in the PSN with which the spectrum is being shared, and if the warning level is above the warning threshold and/or the PSN traffic load is above the traffic threshold the CN will decide to release one or more PSN carriers.
- In the process of releasing the shared PSN carrier, the CN node stops the cross-carrier scheduling on the shared PSN carriers. Instead the CN node limits the scheduling of the UE for transmissions only on CN carriers. For example the UE may be configured to operate in a single carrier mode if no secondary carrier is available due to the release of PSN carrier.
- The CN node turns off control channels and physical signals on the shared PSN carriers which are being released.
- The CN node releasing one or more PSN carrier may also signal the information related to the released PSN carrier, e.g. cell ID, time period, and purpose of releasing the carrier to other network nodes in the CN. The node receiving this information may use this to decide whether to perform one or more network operational tasks or not as already described.

### Methods and nodes

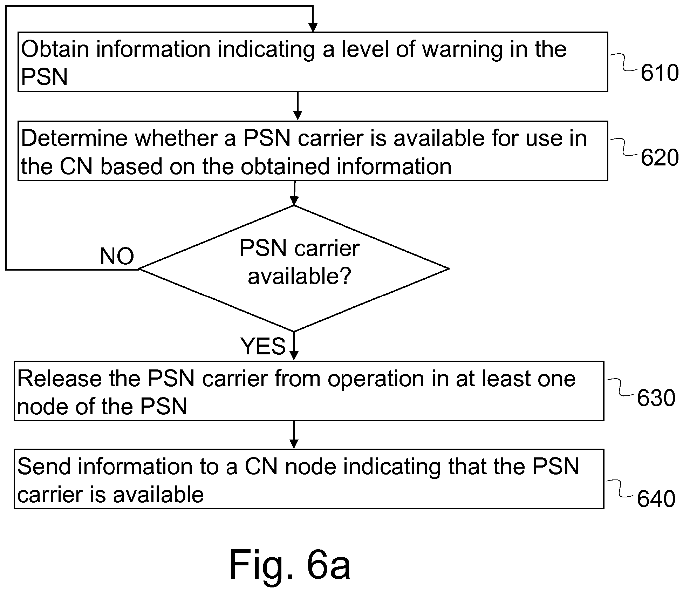

**Figure 6a** is a flowchart illustrating a first embodiment of a method for sharing one or more frequency carriers of a PSN with a CN. The method is performed in a PSN node 800. The PSN node may in one embodiment be a P-eNB as in **Figure 3**. The method comprises:
- 610: Obtaining information indicating a level of warning in the PSN. The information may e.g. be obtained from a PS warning content provider, or it may be obtained by analyzing the traffic patterns in the PSN to detect if there is a PS situation or not.
- 620: Determining whether a PSN carrier is available for use in the CN based on the obtained information.

When it is determined that the PSN carrier is available for use in the CN, the method further comprises:
- 630: Releasing the PSN carrier from operation in at least one node of the PSN.
- 640: Sending information to a CN node 850 indicating that the PSN carrier is available for use in the CN. The information may be sent directly to a CN node via an inter-network X2 interface 303, or indirectly via a coordinator 304 depending on the architecture, as described above.

The method may further comprise receiving a request for information related to availability of PSN carriers, from the CN node 850. The step of determining, 620, whether the PSN carrier is available for use in the CN may be performed in response to the received request. Alternatively, the determining, 620, may be performed unsolicited, i.e. without receiving a request.

In one embodiment, it is determined that the PSN carrier is available for use in the CN when the obtained information indicates a level of warning that is below a first threshold. This first threshold may be the warning threshold described above. However, the determining 620 whether the PSN carrier is available for use in the CN may be based also on traffic load in the PSN. It may be determined that the PSN carrier is available for use in the CN when the traffic load is below a second threshold. This second threshold may be the traffic threshold described previously.

In embodiments, the releasing 630 of the PSN carrier from operation in at least one node of the PSN comprises at least one of: broadcasting information to wireless devices in the PSN; and configuring wireless devices in connected state in the PSN with information. The wireless devices may be UEs. The broadcasted and configured information may be indicating that the PSN carrier will be released from operation, and may comprise at least one of:
- A starting reference time indicating when the PSN carrier is released;
- A duration indicating for how long the PSN carrier is released;
- An indication to stop performing measurements on the PSN carrier.

The releasing 630 of the PSN carrier also comprises turning off control channels and physical signals for the PSN carrier.

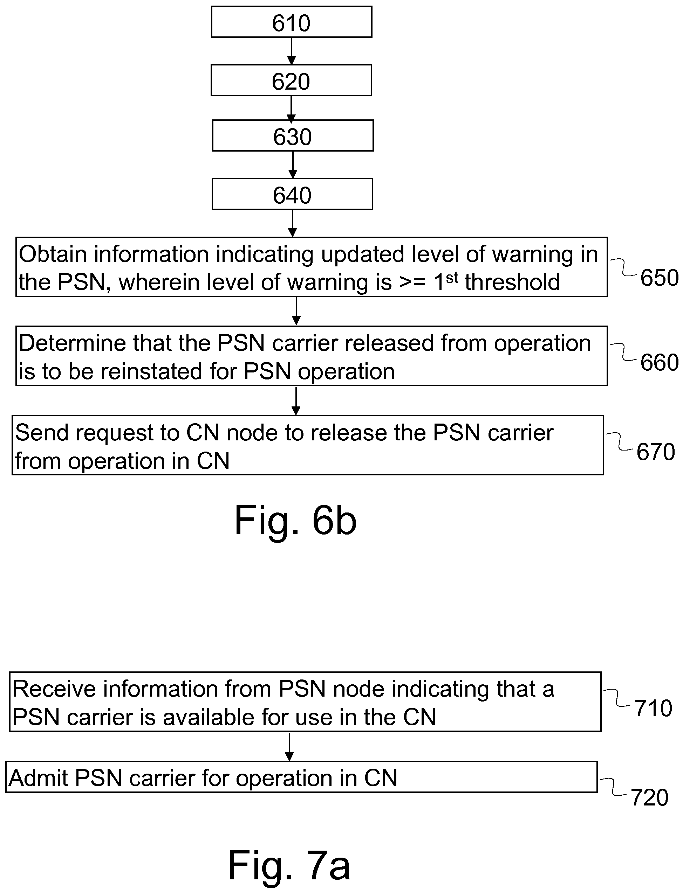

**Figure 6b** is a flowchart illustrating another embodiment of the method in the PSN node. The method may be combined with any of the above described embodiments, and comprises in addition to steps 610-640 described above:
- 650: Obtaining information indicating an updated level of warning in the PSN. The updated level of warning indicates a level of warning equal to or above the first threshold.
- 660: Determining that the PSN carrier released from operation is to be reinstated for PSN operation based on the updated level of warning.
- 670: Sending a request to the CN node 850 to release the PSN carrier from operation in the CN.

In any of the above described embodiments, the information indicating that the PSN carrier is available for use in the CN may comprise at least one of the following: an identity of the PSN carrier, an identity of the cell in which the PSN carrier is available, an identity of a radio network node for which the PSN carrier is available, a duration of the PSN carrier availability, a location or geographical coordinates of an area in which the PSN carrier is available, and radio transmission characteristics requirements for the PSN carrier.

**Figure 7a** is a flowchart illustrating the first embodiment of the method for sharing one or more frequency carriers of a PSN with a CN, performed in the CN node. The method is thus corresponding to the method illustrated in **Figure 6a** and described above. The CN node may in one embodiment be a C-eNB as illustrated in **Figure 3**. The method comprises:
- 710: Receiving information from a PSN node indicating that a PSN carrier is available for use in the CN, wherein the availability of the PSN carrier is determined by the PSN node based on a level of warning in the PSN.
- 720: Admitting the PSN carrier for operation in the CN. This step may comprise turning on control channels and physical signals for the PSN carrier. It may also comprise at least one of broadcasting information to wireless devices in the CN; and configuring wireless devices in connected state in the CN with information. The broadcasted and configured information may indicate that the PSN carrier is admitted for operation in the CN, and may comprises at least one of: a starting reference time indicating when the PSN carrier is admitted; a duration indicating for how long the PSN carrier is admitted; and an indication to start performing measurements on the admitted PSN carrier.

The method may further comprise sending a request for information related to availability of PSN carriers, to the PSN node. In such a case the information from the PSN node indicating that the PSN carrier is available for use in the CN is received in response to the request for information related to availability of PSN carriers.

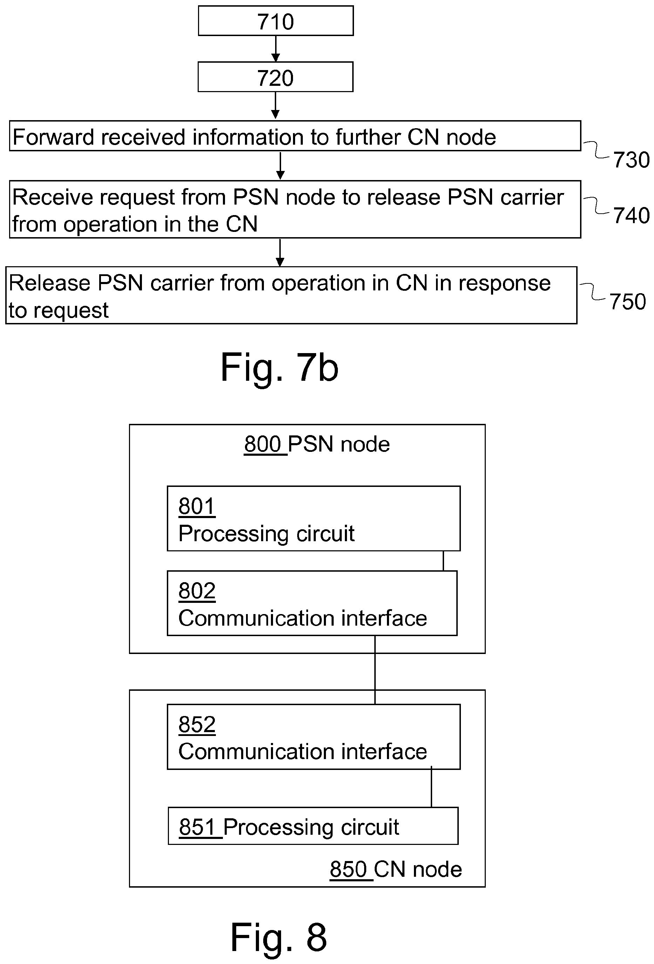

**Figure 7b** is a flowchart illustrating a second embodiment of the method in the CN node. The method may be combined with any of the above described embodiments, and comprises in addition to steps 710-720 described above:
- 730: Forwarding the received information to a further CN node. It may for example be forwarded to a neighbouring C-eNB to allow for sharing also in other parts of the CN.
- 740: Receiving a request from the PSN node to release the PSN carrier from operation in the CN, wherein the request is based on an updated level of warning in the PSN.
- 750: Releasing the PSN carrier from operation in the CN in response to the received request to release the PSN carrier from operation in the CN.

In any of the above described embodiments, the PSN carrier admitted for operation in the CN may be configured to be used as a stand-alone carrier in the CN or as a carrier aggregated to an existing CN carrier.

An embodiment of a PSN node 800 configured to share one or more frequency carriers of a PSN with a CN, is schematically illustrated in the block diagram in **Figure 8**. The PSN node may e.g. be a P-eNB. The PSN node 800 comprises a processing circuit 801 and a communication interface 802 connected to the processing circuit. The communication interface may e.g. allow for communication over an inter-network X2 interface to the CN, as in **Figure 3**. The processing circuit is configured to obtain information indicating a level of warning in the PSN, and to determine whether a PSN carrier is available for use in the CN based on the obtained information. When it is determined that the PSN carrier is available for use in the CN, the processing circuit is further configured to release the PSN carrier from operation in at least one node of the PSN, and send information via the communication interface to a CN node 850 indicating that the PSN carrier is available for use in the CN. The processing circuit 801 may be further configured to receive via the communication interface 802 a request for information related to availability of PSN carriers, from the CN node 850. The processing circuit 801 may thus also be configured to determine whether the PSN carrier is available for use in the CN in response to the received request.

In one embodiment, the processing circuit 801 is configured to determine that the PSN carrier is available for use in the CN when the obtained information indicates a level of warning that is below a first threshold. However, the processing circuit 801 may be configured to determine whether the PSN carrier is available for use in the CN based also on a traffic load in the PSN, and may be configured to determine that the PSN carrier is available for use in the CN when the traffic load is below a second threshold.

The processing circuit 801 is in embodiments configured to release the PSN carrier from operation in at least one node of the PSN by at least one of: broadcasting information to wireless devices in the PSN; and configuring wireless devices in connected state in the PSN with information. The broadcasted and configured information may indicate that the PSN carrier will be released from operation, and may comprise at least one of: a starting reference time indicating when the PSN carrier is released; a duration indicating for how long the PSN carrier is released; and an indication to stop performing measurements on the released PSN carrier. Furthermore, the processing circuit 801 is configured to release the PSN carrier from operation in at least one node of the PSN by further turning off control channels and physical signals for the PSN carrier.

In the second embodiment, also discussed with reference to **Figure 6b** above, the processing circuit 801 is configured to obtain information indicating an updated level of warning in the PSN. The updated level of warning indicates a level of warning equal to or above the first threshold. The processing circuit 801 is further configured to determine that the PSN carrier released from operation is to be reinstated for PSN operation based on the updated level of warning, and to send via the communication interface 802 a request to the CN node 850 to release the PSN carrier from operation in the CN.

In any of the above described embodiments of the PSN node 800, the information indicating that the PSN carrier is available for use in the CN may comprise at least one of the following: an identity of the PSN carrier, an identity of the cell in which the PSN carrier is available, an identity of a radio network node for which the PSN carrier is available, a duration of the PSN carrier availability, a location or geographical coordinates of an area in which the PSN carrier is available, and radio transmission characteristics requirements for the PSN carrier.

Alternatively, the PSN node 800 may include several functional units which may be implemented in hardware, software, firmware or any combination thereof. In an embodiment, the PSN node includes an obtaining unit for obtaining information indicating a level of warning in the PSN; a determining unit for determining whether a PSN carrier is available for use in the CN; a releasing unit for releasing the PSN carrier from operation; and a transmitting unit for sending information to a CN node via the communication interface indicating that the PSN carrier is available.

In a further alternative way to describe the embodiment in **Figure 8****,** the PSN node 800 comprises a Central Processing Unit (CPU) which may be a single unit or a plurality of units. Furthermore, the PSN node 800 comprises at least one computer program product (CPP) in the form of a non-volatile memory, e.g. an Electrically Erasable Programmable Read-Only Memory (EEPROM), a flash memory or a disk drive. The CPP comprises a computer program, which comprises code means which when run on the PSN node 800 causes the CPU to perform steps of the procedure described earlier in conjunction with **Figure 6a**. In other words, when said code means are run on the CPU, they correspond to the processing circuit 801 of **Figure 8**. The processing circuit 801 and the communication interface 802 described above with reference to **Figure 8** may be logical units, separate physical units or a combination of both logical and physical units.

An embodiment of a CN node 850 configured to share one or more frequency carriers of a PSN, is also schematically illustrated in the block diagram in **Figure 8****.** The CN node comprises a processing circuit 851 and a communication interface 852 connected to the processing circuit 851. The processing circuit 851 is configured to receive via the communication interface 852 information from the PSN node 800 indicating that a PSN carrier is available for use in the CN. The availability of the PSN carrier is determined by the PSN node based on a level of warning in the PSN. The processing circuit 851 is also configured to admit the PSN carrier for operation in the CN.

The processing circuit 851 may be configured to send via the communication interface 852 a request for information related to availability of PSN carriers, to the PSN node 800. The processing circuit 851 may also be configured to receive via the communication interface 852 the information from the PSN node 800 indicating that the PSN carrier is available for use in the CN, in response to the request for information related to availability of PSN carriers.

The processing circuit 851 is in embodiments configured to forward via the communication interface 852 the received information to a further CN node. The processing circuit 851 may also be configured to admit the PSN carrier for operation in the CN by turning on control channels and physical signals for the PSN carrier, and by at least one of: broadcasting information to wireless devices in the CN; and configuring wireless devices in connected state in the CN with information. The broadcasted and configured information may indicate that the PSN carrier is admitted for operation in the CN, and may comprise at least one of: a starting reference time indicating when the PSN carrier is admitted; a duration indicating for how long the PSN carrier is admitted; and an indication to start performing measurements on the admitted PSN carrier.

The processing circuit 851 is in embodiments configured to receive a request via the communication interface 852 from the PSN node 800 to release the PSN carrier from operation in the CN. The request is based on an updated level of warning in the PSN. The processing circuit 851 is in embodiments also configured to release the PSN carrier from operation in the CN in response to the received request to release the PSN carrier from operation in the CN.

In any of the above described embodiments of the CN node 850, the PSN carrier admitted for operation in the CN may be configured to be used as a stand-alone carrier in the CN or as a carrier aggregated to an existing CN carrier.

Alternatively, the CN node 850 may include several functional units which may be implemented in hardware, software, firmware or any combination thereof. In an embodiment, the CN node includes a receiving unit for receiving via the communication interface 852 information from the PSN node indicating that a PSN carrier is available for use in the CN; and an admitting unit for admitting the PSN carrier for operation in the CN.

In a further alternative way to describe the embodiment in **Figure 8****,** the CN node 850 comprises a Central Processing Unit (CPU) which may be a single unit or a plurality of units. Furthermore, the CN node 850 comprises at least one computer program product (CPP) in the form of a non-volatile memory, e.g. an EEPROM, a flash memory or a disk drive. The CPP comprises a computer program, which comprises code means which when run on the CN node 850 causes the CPU to perform steps of the procedure described earlier in conjunction with **Figure 7a**. In other words, when said code means are run on the CPU, they correspond to the processing circuit 851 of **Figure 8**. The processing circuit 851 and the communication interface 852 described above with reference to **Figure 8** may be logical units, separate physical units or a combination of both logical and physical units.

The above mentioned and described embodiments are only given as examples and should not be limiting. Other solutions, uses, objectives, and functions within the scope of the accompanying patent claims may be possible.

## Claims

1. A public safety network, PSN, node (800) configured to share one or more frequency carriers of a PSN with a commercial network, CN, the PSN node comprising a processing circuit (801) and a communication interface (802) connected to the processing circuit, the processing circuit configured to:
- obtain information indicating a level of warning in the PSN, wherein the information comprises at least one of a type of a warning situation, a severity level of the warning, a duration of the warning, and an area or location affected by the warning;
- determine whether a PSN carrier is available for use in the CN based on the obtained information, and
when it is determined that the PSN carrier is available for use in the CN,
- release the PSN carrier from operation in at least one node of the PSN, and
- send information via the communication interface to a CN node (850) indicating that the PSN carrier is available for use in the CN.

2. The PSN node (800) according to claim 1, wherein the processing circuit (801) is configured to:
- receive via the communication interface (802) a request for information related to availability of PSN carriers, from the CN node (850), and
- determine whether the PSN carrier is available for use in the CN in response to the received request.

3. The PSN node (800) according to any of claims 1 or 2, wherein the processing circuit (801) is configured to determine that the PSN carrier is available for use in the CN when the obtained information indicates a level of warning that is below a first threshold.

4. The PSN node (800) according to any of claims 1 to 3, wherein the processing circuit (801) is configured to determine whether the PSN carrier is available for use in the CN based also on a traffic load in the PSN.

5. The PSN node (800) according to claim 4, wherein the processing circuit (801) is configured to determine that the PSN carrier is available for use in the CN when the traffic load is below a second threshold.

6. The PSN node (800) according to any of claims 1 to 5, wherein the processing circuit (801) is configured to release the PSN carrier from operation in at least one node of the PSN by at least one of: broadcasting information to wireless devices in the PSN; and configuring wireless devices in connected state in the PSN with information, said broadcasted and configured information indicating that the PSN carrier will be released from operation, and wherein the processing circuit (801) is configured to release the PSN carrier from operation in at least one node of the PSN by further turning off control channels and physical signals for the PSN carrier.

7. The PSN node (800) according to claim 6, wherein said broadcasted and configured information comprises at least one of:
- a starting reference time indicating when the PSN carrier is released,
- a duration indicating for how long the PSN carrier is released, and
- an indication to stop performing measurements on the PSN carrier.

8. The PSN node (800) according to any of claims 1 to 7, wherein the processing circuit (801) is configured to:
- obtain information indicating an updated level of warning in the PSN, wherein the updated level of warning indicates a level of warning equal to or above the first threshold,
- determine that the PSN carrier released from operation is to be reinstated for PSN operation based on the updated level of warning, and
- send via the communication interface (802) a request to the CN node (850) to release the PSN carrier from operation in the CN.

9. The PSN node (800) according to any of the claims 1 to 8, wherein the information indicating that the PSN carrier is available for use in the CN comprises at least one of the following: an identity of the PSN carrier, an identity of the cell in which the PSN carrier is available, an identity of a radio network node for which the PSN carrier is available, a duration of the PSN carrier availability, a location or geographical coordinates of an area in which the PSN carrier is available, and radio transmission characteristics requirements for the PSN carrier.

10. A commercial network, CN, node (850) configured to share one or more frequency carriers of a public safety network, PSN, the CN node comprising a processing circuit (851) and a communication interface (852) connected to the processing circuit, wherein the processing circuit is configured to:
- receive via the communication interface (852) information from a PSN node (800) indicating that a PSN carrier is available for use in the CN, wherein the availability of the PSN carrier is determined by the PSN node based on information indicating a level of warning in the PSN, the information comprising at least one of a type of a warning situation, a severity level of the warning, a duration of the warning, and an area or location affected by the warning; and
- admit the PSN carrier for operation in the CN.

11. The CN node (850) according to claim 10 wherein the processing circuit (851) is configured to:
- send via the communication interface (852) a request for information related to availability of PSN carriers, to the PSN node (800), and
- receive via the communication interface (852) the information from the PSN node (800) indicating that the PSN carrier is available for use in the CN in response to the request for information related to availability of PSN carriers.

12. The CN node (850) according to any of claims 10 to 11, wherein the processing circuit (851) is configured to:
- forward via the communication interface (852) the received information to a further CN node.

13. The CN node (850) according to any of claims 10 to 12 wherein the processing circuit (851) is configured to admit the PSN carrier for operation in the CN by:
- turning on control channels and physical signals for the PSN carrier, and
- at least one of: broadcasting information to wireless devices in the CN; and configuring wireless devices in connected state in the CN with information; said broadcasted and configured information indicating that the PSN carrier is admitted for operation in the CN.

14. The CN node (850) according to any of claims 10 to 13 wherein said broadcasted and configured information comprises at least one of:
- a starting reference time indicating when the PSN carrier is admitted,
- a duration indicating for how long the PSN carrier is admitted, and
- an indication to start performing measurements on the admitted PSN carrier.

15. The CN node (850) according to any of claims 10-14, wherein the processing circuit (851) is configured to:
- receive a request via the communication interface (852) from the PSN node (800) to release the PSN carrier from operation in the CN, wherein the request is based on an updated level of warning in the PSN, and
- release the PSN carrier from operation in the CN in response to the received request to release the PSN carrier from operation in the CN.

## Patentansprüche

1. Knoten eines öffentlichen Sicherheitsnetzwerks, PSN-Knoten, (800), der konfiguriert ist, um einen oder mehrere Frequenzträger eines PSN mit einem kommerziellen Netzwerk, CN, gemeinsam zu nutzen, wobei der PSN-Knoten eine Verarbeitungsschaltung (801) und eine mit der Verarbeitungsschaltung verbundene Kommunikationsschnittstelle (802) umfasst, wobei die Verarbeitungsschaltung konfiguriert ist zum:
- Erhalten von Informationen, die eine Warnungsstufe in dem PSN angeben, wobei die Informationen mindestens eines von einer Art einer Warnungssituation, einem Schweregrad der Warnung, einer Dauer der Warnung und einem/einer durch die Warnung betroffenen Bereich oder Stelle umfasst;
- Bestimmen, basierend auf den erhaltenen Informationen, ob ein PSN-Träger zur Verwendung in dem CN verfügbar ist, und
wenn bestimmt wird, dass der PSN-Träger zur Verwendung in dem CN verfügbar ist,
- Außerbetriebnehmen des PSN-Trägers in mindestens einem Knoten des PSN, und
- Senden von Informationen über die Kommunikationsschnittstelle an einen CN-Knoten (850), die angeben, dass der PSN-Träger zur Verwendung in dem CN verfügbar ist.

2. PSN-Knoten (800) nach Anspruch 1, wobei die Verarbeitungsschaltung (801) konfiguriert ist zum:
- Empfangen, über die Kommunikationsschnittstelle (802), einer Anforderung von Informationen in Bezug auf die Verfügbarkeit von PSN-Trägern von dem CN-Knoten (850), und
- Bestimmen, als Reaktion auf die empfangene Anforderung, ob der PSN-Träger zur Verwendung in dem CN verfügbar ist.

3. PSN-Knoten (800) nach einem der Ansprüche 1 oder 2, wobei die Verarbeitungsschaltung (801) konfiguriert ist, um zu bestimmen, dass der PSN-Träger zur Verwendung in dem CN verfügbar ist, wenn die erhaltenen Informationen eine Warnungsstufe angeben, die unter einem ersten Schwellenwert liegt.

4. PSN-Knoten (800) nach einem der Ansprüche 1 bis 3, wobei die Verarbeitungsschaltung (801) konfiguriert ist, um auch basierend auf einer Verkehrslast in dem PSN zu bestimmen, ob der PSN-Träger zur Verwendung in dem CN verfügbar ist.

5. PSN-Knoten (800) nach Anspruch 4, wobei die Verarbeitungsschaltung (801) konfiguriert ist, um zu bestimmen, dass der PSN-Träger zur Verwendung in dem CN verfügbar ist, wenn die Verkehrslast unter einem zweiten Schwellenwert liegt.

6. PSN-Knoten (800) nach einem der Ansprüche 1 bis 5, wobei die Verarbeitungsschaltung (801) konfiguriert ist, um den PSN-Träger in mindestens einem Knoten des PSN außer Betrieb zu nehmen durch mindestens eines von: Rundsenden von Informationen an drahtlose Vorrichtungen in dem PSN; und Konfigurieren von drahtlosen Vorrichtungen im verbundenen Zustand im PSN mit Informationen, wobei die rundgesendeten und konfigurierten Informationen angeben, dass der PSN-Träger außer Betrieb genommen wird, und wobei die Verarbeitungsschaltung (801) konfiguriert ist, um den PSN-Träger in mindestens einem Knoten des PSN durch weiteres Abschalten von Steuerkanälen und physikalischen Signalen für den PSN-Träger außer Betrieb zu nehmen.

7. PSN-Knoten (800) nach Anspruch 6, wobei die rundgesendeten und konfigurierten Informationen mindestens eines umfassen von:
- einer Startreferenzzeit, die angibt, wann der PSN-Träger außer Betrieb genommen wird,
- einer Dauer, die angibt, für wie lange der PSN-Träger außer Betrieb genommen wird, und
- einer Angabe zum Stoppen des Durchführens von Messungen an dem PSN-Träger.

8. PSN-Knoten (800) nach einem der Ansprüche 1 bis 7, wobei die Verarbeitungsschaltung (801) konfiguriert ist zum:
- Erhalten von Informationen, die eine aktualisierte Warnungsstufe in dem PSN angeben, wobei die aktualisierte Warnungsstufe eine Warnungsstufe angibt, die gleich oder über dem ersten Schwellenwert ist,
- Bestimmen, dass der außer Betrieb genommene PSN-Träger basierend auf der aktualisierten Warnungsstufe wieder für PSN-Betrieb eingesetzt werden soll, und
- Senden, über die Kommunikationsschnittstelle (802), einer Anforderung an den CN-Knoten (850), um den PSN-Träger in dem CN außer Betrieb zu nehmen.

9. PSN-Knoten (800) nach einem der Ansprüche 1 bis 8, wobei die Informationen, die angeben, dass der PSN-Träger zur Verwendung in dem CN verfügbar ist, mindestens eines der Folgenden umfasst: eine Identität des PSN-Trägers, eine Identität der Zelle, in der der PSN-Träger verfügbar ist, eine Identität eines Funknetzknotens, für den der PSN-Träger verfügbar ist, eine Dauer der Verfügbarkeit des PSN-Trägers, eine Stelle oder geographische Koordinaten eines Bereichs, in dem der PSN-Träger verfügbar ist, und Funkübertragungseigenschaftsanforderungen für den PSN-Träger.

10. Knoten eines kommerziellen Netzwerks, CN-Knoten, (850), der konfiguriert ist, um einen oder mehrere Frequenzträger eines öffentlichen Sicherheitsnetzwerks, PSN, gemeinsam zu nutzen, wobei der CN-Knoten eine Verarbeitungsschaltung (851) und eine mit der Verarbeitungsschaltung verbundene Kommunikationsschnittstelle (852) umfasst, wobei die Verarbeitungsschaltung konfiguriert ist zum:
- Empfangen, über die Kommunikationsschnittstelle (852), von Informationen von einem PSN-Knoten (800), die angeben, dass ein PSN-Träger zur Verwendung in dem CN verfügbar ist, wobei die Verfügbarkeit des PSN-Trägers durch den PSN-Knoten basierend auf Informationen bestimmt wird, die eine Warnungsstufe in dem PSN angeben, wobei die Informationen mindestens eines von einer Art einer Warnungssituation, einem Schweregrad der Warnung, einer Dauer der Warnung und einem/einer durch die Warnung betroffenen Bereich oder Stelle umfassen; und
- Zulassen des PSN-Trägers für den Betrieb in dem CN.

11. CN-Knoten (850) nach Anspruch 10, wobei die Verarbeitungsschaltung (851) konfiguriert ist zum:
- Senden, über die Kommunikationsschnittstelle (852), einer Anforderung von Informationen in Bezug auf die Verfügbarkeit von PSN-Trägern an den PSN-Knoten (800), und
- Empfangen, über die Kommunikationsschnittstelle (852), der Informationen von dem PSN-Knoten (800), die angeben, dass der PSN-Träger zur Verwendung in dem CN verfügbar ist, als Antwort auf die Anforderung von Informationen in Bezug auf die Verfügbarkeit von PSN-Trägern.

12. CN-Knoten (850) nach einem der Ansprüche 10 bis 11, wobei die Verarbeitungsschaltung (851) konfiguriert ist zum:
- Weiterleiten, über die Kommunikationsschnittstelle (852), der empfangenen Informationen an einen weiteren CN-Knoten.

13. CN-Knoten (850) nach einem der Ansprüche 10 bis 12, wobei die Verarbeitungsschaltung (851) konfiguriert ist, um den PSN-Träger für den Betrieb in dem CN zuzulassen durch:
- Einschalten von Steuerkanälen und physikalischen Signalen für den PSN-Träger, und
- mindestens eines von: Rundsenden von Informationen an drahtlose Vorrichtungen in dem CN; und Konfigurieren von drahtlosen Vorrichtungen im verbundenen Zustand in dem CN mit Informationen; wobei die rundgesendeten und konfigurierten Informationen angeben, dass der PSN-Träger für den Betrieb in dem CN zugelassen ist.

14. CN-Knoten (850) nach einem der Ansprüche 10 bis 13, wobei die rundgesendeten und konfigurierten Informationen mindestens eines umfassen von:
- einer Startreferenzzeit, die angibt, wann der PSN-Träger zugelassen ist,
- einer Dauer, die angibt, für wie lange der PSN-Träger zugelassen wird, und
- einer Angabe zum Starten des Durchführens von Messungen an dem zugelassenen PSN-Träger.

15. CN-Knoten (850) nach einem der Ansprüche 10 bis 14, wobei die Verarbeitungsschaltung (851) konfiguriert ist zum:
- Empfangen einer Anforderung über die Kommunikationsschnittstelle (852) von dem PSN-Knoten (800), um den PSN-Träger in dem CN außer Betrieb zu nehmen, wobei die Anforderung auf einer aktualisierten Warnungsstufe in dem PSN basiert, und
- Außerbetriebnehmen des PSN-Trägers in dem CN als Reaktion auf die empfangene Anforderung, den PSN-Träger in dem CN außer Betrieb zu nehmen.

## Revendications

1. Nœud de réseau de sécurité publique, PSN (800) configuré pour partager une ou plusieurs porteuses de fréquence d'un PSN avec un réseau commercial, CN, le nœud PSN comprenant un circuit de traitement (801) et une interface de communication (802) connectée au circuit de traitement, le circuit de traitement configuré pour :
- obtenir des informations indiquant un niveau d'avertissement dans le PSN, dans lequel les informations comprennent au moins l'un parmi un type d'une situation d'avertissement, un niveau de gravité de l'avertissement, une durée de l'avertissement, et une zone ou localisation affectée par l'avertissement ;
- déterminer si une porteuse PSN est disponible pour utilisation dans le CN sur la base des informations obtenues, et
lorsqu'il est déterminé que la porteuse PSN est disponible pour utilisation dans le CN,
- libérer la porteuse PSN d'un fonctionnement dans au moins un nœud du PSN, et
- envoyer des informations via l'interface de communication à un nœud CN (850) indiquant que la porteuse PSN est disponible pour utilisation dans le CN.

2. Nœud PSN (800) selon la revendication 1, dans lequel le circuit de traitement (801) est configuré pour :
- recevoir via l'interface de communication (802) une demande d'informations se rapportant à une disponibilité de porteuses PSN, depuis le nœud CN (850), et
- déterminer si la porteuse PSN est disponible pour utilisation dans le CN en réponse à la demande reçue.

3. Nœud PSN (800) selon l'une quelconque des revendications 1 ou 2, dans lequel le circuit de traitement (801) est configuré pour déterminer que la porteuse PSN est disponible pour utilisation dans le CN lorsque les informations obtenues indiquent un niveau d'avertissement qui est en dessous d'un premier seuil.

4. Nœud PSN (800) selon l'une quelconque des revendications 1 à 3, dans lequel le circuit de traitement (801) est configuré pour déterminer si la porteuse PSN est disponible pour utilisation dans le CN sur la base également d'un volume de trafic dans le PSN.

5. Nœud PSN (800) selon la revendication 4, dans lequel le circuit de traitement (801) est configuré pour déterminer que la porteuse PSN est disponible pour utilisation dans le CN lorsque le volume de trafic est en dessous d'un deuxième seuil.

6. Nœud PSN (800) selon l'une quelconque des revendications 1 à 5, dans lequel le circuit de traitement (801) est configuré pour libérer la porteuse PSN d'un fonctionnement dans au moins un nœud du PSN par au moins l'un parmi : la diffusion d'informations aux dispositifs sans fil dans le PSN ; et la configuration de dispositifs sans fil dans l'état connecté dans le PSN avec des informations, lesdites informations diffusées et configurées indiquant que la porteuse PSN sera libérée d'un fonctionnement, et dans lequel le circuit de traitement (801) est configuré pour libérer la porteuse PSN d'un fonctionnement dans au moins un nœud du PSN en désactivant en outre des canaux de commande et des signaux physiques pour la porteuse PSN.

7. Nœud PSN (800) selon la revendication 6, dans lequel lesdites informations diffusées et configurées comprennent au moins l'un parmi :
- un temps de référence de départ indiquant le moment où la porteuse PSN est libérée,
- une durée indiquant pendant combien de temps la porteuse PSN est libérée, et
- une indication pour arrêter la mise en œuvre de mesures sur la porteuse PSN.

8. Nœud PSN (800) selon l'une quelconque des revendications 1 à 7, dans lequel le circuit de traitement (801) est configuré pour :
- obtenir des informations indiquant un niveau d'avertissement mis à jour dans le PSN, dans lequel le niveau d'avertissement mis à jour indique un niveau d'avertissement égal ou supérieur au premier seuil,
- déterminer que la porteuse PSN libérée d'un fonctionnement doit être rétablie pour un fonctionnement PSN sur la base du niveau d'avertissement mis à jour, et
- envoyer via l'interface de communication (802) une demande au nœud CN (850) pour libérer la porteuse PSN d'un fonctionnement dans le CN.

9. Nœud PSN (800) selon l'une quelconque des revendications 1 à 8, dans lequel les informations indiquant que la porteuse PSN est disponible pour utilisation dans le CN comprennent au moins l'une des suivantes : une identité de la porteuse PSN, une identité de la cellule dans laquelle la porteuse PSN est disponible, une identité d'un nœud de réseau radio pour lequel la porteuse PSN est disponible, une durée de la disponibilité de porteuse PSN, une localisation ou des coordonnées géographiques d'une zone dans laquelle la porteuse PSN est disponible, et des exigences de caractéristiques de transmission radio pour la porteuse PSN.

10. Nœud de réseau commercial, CN (850) configuré pour partager une ou plusieurs porteuses de fréquence d'un réseau de sécurité publique, PSN, le nœud CN comprenant un circuit de traitement (851) et une interface de communication (852) connectée au circuit de traitement, dans lequel le circuit de traitement est configuré pour :
- recevoir via l'interface de communication (852) des informations depuis un nœud PSN (800) indiquant qu'une porteuse PSN est disponible pour utilisation dans le CN, dans lequel la disponibilité de la porteuse PSN est déterminée par le nœud PSN sur la base d'informations indiquant un niveau d'avertissement dans le PSN, les informations comprenant au moins l'un parmi un type d'une situation d'avertissement, un niveau de gravité de l'avertissement, une durée de l'avertissement et une zone ou localisation affectée par l'avertissement ; et
- admettre la porteuse PSN pour un fonctionnement dans le CN.

11. Nœud CN (850) selon la revendication 10, dans lequel le circuit de traitement (851) est configuré pour :
- envoyer via l'interface de communication (852) une demande d'informations se rapportant à une disponibilité de porteuses PSN, vers le nœud PSN (800), et
- recevoir via l'interface de communication (852) les informations depuis le nœud PSN (800) indiquant que la porteuse PSN est disponible pour utilisation dans le CN en réponse à la demande d'informations se rapportant à une disponibilité de porteuses PSN.

12. Nœud CN (850) selon l'une quelconque des revendications 10 à 11, dans lequel le circuit de traitement (851) est configuré pour :
- acheminer via l'interface de communication (852) les informations reçues vers un autre nœud CN.

13. Nœud CN (850) selon l'une quelconque des revendications 10 à 12, dans lequel le circuit de traitement (851) est configuré pour admettre la porteuse PSN pour un fonctionnement dans le CN par :
- activation de canaux de commande et de signaux physiques pour la porteuse PSN, et
- au moins l'une parmi : la diffusion d'informations aux dispositifs sans fil dans le CN ; et la configuration de dispositifs sans fil dans l'état connecté dans le CN avec des informations ; lesdites informations diffusées et configurées indiquant que la porteuse PSN est admise pour un fonctionnement dans le CN.

14. Nœud CN (850) selon l'une quelconque des revendications 10 à 13, dans lequel lesdites informations diffusées et configurées comprennent au moins l'un parmi :
- un temps de référence de départ indiquant le moment où la porteuse PSN est admise,
- une durée indiquant la durée pendant laquelle la porteuse PSN est admise, et
- une indication pour démarrer la mise en œuvre de mesures sur la porteuse PSN admise.

15. Nœud CN (850) selon l'une quelconque des revendications 10 à 14, dans lequel le circuit de traitement (851) est configuré pour :
- recevoir une demande via l'interface de communication (852) depuis le nœud PSN (800) pour libérer la porteuse PSN d'un fonctionnement dans le CN, dans lequel la demande est basée sur un niveau d'avertissement mis à jour dans le PSN, et
- libérer la porteuse PSN d'un fonctionnement dans le CN en réponse à la demande reçue pour libérer la porteuse PSN d'un fonctionnement dans le CN.
